# FASCICULE DE BREVET EUROPEEN

(11) **EP 2 331 319 B1**
(45) Date de publication et mention de la délivrance du brevet: **02.11.2016**
(21) Numéro de dépôt: 09794036.5
(22) Date de dépôt: 09.07.2009
(51) Int. Cl.: B29C 70/24, F01D 5/14, F01D 5/28, B29B 11/16, D03D 25/00, F04D 29/02, F04D 29/54, B29C 70/48, B29C 70/44

(54) **MÉTHODE DE FABRICATION D'UNE AUBE REDRESSEUR DE SOUFFLANTE EN COMPOSITE 3D ET AUBE CORRESPONDANTE**
VERFAHREN ZUR HERSTELLLUNG EINER LEITSCHAUFEL FÜR 3D-VERBUNDGEBLÄSE UND ENTSPRECHENDE LEITSCHAUFEL
METHOD OF FABRICATION OF A STATOR VANE FOR A BLOWER MADE IN 3D COMPOSITE AND CORRESPONDING STATOR VANE

(30) Priorité: 10.07.2008 FR 0854702
(43) Date de publication de la demande: 15.06.2011
(73) Titulaire: Snecma, 75015 Paris (FR)
(72) Inventeur: BELMONTE, Olivier, F-77930 Perthes En Gatinais (FR); MAHIEU, Jean Noël, F-75014 Paris (FR); MILLIER, Xavier, F-77720 Saint Mery (FR)
(74) Mandataire: Delumeau, François Guy
(86) Numéro de dépôt international: PCT/FR2009/051363
(87) Numéro de publication internationale: WO 2010/004216

(56) Documents cités:
- EP-A- 1 526 285
- EP-A- 1 777 063
- US-A- 3 632 460
- US-A1- 2006 283 014

## Description

La présente invention concerne un procédé de fabrication d'une aube redresseur (ou OGV/IGV : *Outlet Guide Vane*/*Inlet Guide Vane).*

Dans des structures où un gain de poids est recherché, par exemple une turbomachine, les aubes redresseur (par exemple aube redresseur de soufflante, aube redresseur basse pression) sont réalisées en matériaux composites à matrice polymère renforcée par des fibres telles que les fibres de carbone, de verre, de Kevlar^{®}. En effet de tels matériaux composites ont une densité sensiblement inférieure aux alliages légers couramment utilisés, pour des performances mécaniques (rigidité, résistance à la rupture) supérieures.

Les composites les plus récents sont réalisés en élaborant une préforme de fibres en 3D, c'est-à-dire un tissage ou un tressage de fibres en trois dimensions. Une telle préforme est ensuite densifiée avec un polymère pour réaliser la pièce composite finie, dans laquelle les fils de la préforme sont noyés au sein d'une matrice polymère solide.

Une technique connue pour réaliser une telle densification est par exemple l'imprégnation par voie liquide : on distingue l'infusion et l'injection.

Dans la technique d'infusion, la préforme est placée entre une moitié de moule et une bâche, un précurseur chimique du polymère sous forme liquide étant ensuite injecté par un côté au sein de la préforme tandis que le vide est effectué entre la moitié de moule et la bâche. Sous l'action du vide, le précurseur diffuse dans toute la préforme, puis est polymérisé par traitement thermique pour le solidifier. Dans la technique d'injection, la préforme est placée dans un moule, puis le précurseur liquide est injecté dans le moule en plusieurs points jusqu'à remplir tout le moule (procédé RTM), et est ensuite polymérisé par traitement thermique.

Une autre technique connue pour réaliser la densification de la préforme est l'infiltration chimique en phase vapeur. La préforme est alors placée dans une enceinte à l'intérieur de laquelle est admise une phase gazeuse contenant un précurseur du polymère. Dans des conditions de température et de pression établies dans l'enceinte, la phase gazeuse diffuse au sein de la préforme, et se transforme en polymère au contact des fibres de la préforme.

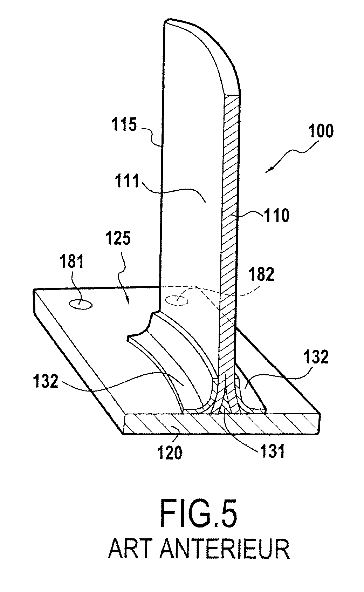

Actuellement, la structure des aubes redresseur n'est pas monobloc, mais est au contraire composée de plusieurs parties assemblées. Ainsi, comme représenté sur la figure 5 qui représente l'art antérieur, une aube redresseur 100 comprend une pale 110 s'étendant radialement par rapport à l'axe principal de la turbomachine, et au moins une plateforme 120. La pale 110 et la plateforme 120 sont des plaques ou des coques en composite 3D ou en composite multicouche (réalisé par empilement de tissus pré-imprégnés 2D reliés entre eux par leur matrice polymère). La plateforme 120 est positionnée à une extrémité radiale de la pale 110, sensiblement perpendiculairement à celle-ci, par exemple à l'extrémité radialement intérieure 111. La pale 110 peut également comporter une seconde plateforme, à son autre extrémité radiale.

Il est nécessaire de fixer solidement l'aube redresseur 100 à la fois à son extrémité radialement intérieure et à son extrémité radialement extérieure. Ainsi, la plateforme 120 se prolonge au-delà du bord d'attaque 115 de la pale 110 par une région amont 125 comportant des trous 181, 182 aptes à recevoir un ensemble de fixation mécanique pour solidariser l'aube 100 avec une virole, un carter. Les trous 181, 182 doivent nécessairement se situer dans la région amont 125, car le manque de place entre deux aubes redresseur adjacentes 100 interdit de placer ces trous et cet ensemble de fixation entre ces aubes (c'est-à-dire dans la partie de la plateforme 120 située entre le bord d'attaque 115 et le bord de fuite (non représenté) d'une aube redresseur 100.

La pale 110 et la plateforme 120 sont deux pièces distinctes. Elles doivent donc être jointes l'une à l'autre. La liaison entre la pale 110 et la plateforme 120 doit être solide, d'autant plus que cette liaison, formant un angle droit, est un lieu de concentration de contraintes. Il est donc nécessaire de rapporter à l'endroit de cette liaison des éléments supplémentaires tels qu'une âme 130, des renforts 132 (et/ou des inserts) comme représenté sur la figure 5. Malgré ce renforcement, la liaison entre la pale 110 et la plateforme 120 reste plus fragile que le reste de l'aube 100, car elle est composée d'éléments initialement disjoints et assemblés par collage, souvent réalisés en matériaux différents. La transmission d'efforts entre la pale 110 et la plateforme 120 est aussi mal assurée. De plus, cet ajout d'éléments nécessite de nombreuses opérations de fabrication supplémentaires, ce qui génère des coûts de fabrication plus élevés.

La présente invention vise à remédier à ces inconvénients, ou tout au moins à les atténuer.

Le document EP-A-1 526 285 décrit un procédé de fabrication d'une aube réalisée en un matériau composite comprenant une matrice polymère renforcée par une structure fibreuse. Le procédé comprend l'élaboration par tissage 3D en une seule pièce d'une préforme fibreuse comprenant une première partie s'étendant selon un axe longitudinal et constituant la préforme de la pale de ladite aube, et, à une extrémité longitudinale de ladite première partie, une seconde partie constituant la préforme de la plate-forme de ladite aube, la conformation de ladite préforme dans un moule, et la densification de ladite préforme avec une matrice polymère. Selon le procédé de fabrication, on découpe ladite préforme selon la forme et les dimensions des parties constructives de l'aube avant de placer la préforme dans le moule.

L'invention vise à proposer un procédé de fabrication d'une aube redresseur qui soit plus facile, moins coûteux, et de telle sorte que l'aube fabriquée possède une meilleure tenue mécanique, en particulier à l'endroit où la pale rejoint la plateforme, et comporte une région située en avant du bord d'attaque de l'aube et apte à être fixée sur un support.

Ce but est atteint grâce au fait que le procédé comprend l'élaboration par tissage 3D en une seule pièce d'une préforme fibreuse comprenant une première partie s'étendant selon un axe longitudinal et constituant la préforme de la pale de l'aube, et, à une extrémité longitudinale de ladite première partie, une seconde partie constituant la préforme de la plateforme de l'aube, la seconde partie étant élaborée en une première couche et une seconde couche en regard de la première couche et séparée de la première couche par déliage sans coupe lors de l'élaboration de la préforme, le pliage de la première couche et de la seconde couche de telle sorte que chacune soit dans un plan perpendiculaire à cet axe longitudinal sensiblement symétriquement l'une de l'autre par rapport à la première partie, et qu'une région de la première couche recouvre une région de la seconde couche en avant d'un bord avant de la première partie, la conformation de la préforme dans un moule, et la densification de la préforme avec une matrice polymère.

Grâce à ces dispositions, l'aube possède une meilleure tenue mécanique puisque les éléments fibreux constituant la préforme ne sont pas coupés, spécialement à la séparation entre la première couche et la seconde couche. Ainsi, les éléments fibreux sont continus entre la première partie et la seconde partie, et peuvent ainsi transmettre les efforts entre ces deux parties. De plus, le recouvrement de la première couche et de la seconde couche en avant d'un bord de la pale permet une plus grande solidité de la plateforme et donc de l'aube, ces deux couches étant reliées entre elles lors du processus de densification par la matrice polymère, puis aptes à être fixées solidement sur un support.

Avantageusement, on réalise une cambrure de la préforme fibreuse de la première couche dans une zone adjacente à la première partie, et une cambrure de la préforme fibreuse de la seconde couche dans une zone adjacente à la première partie, de telle sorte que la zone de la première couche et la zone de la seconde couche adjacentes à la première partie aient tendance à se positionner chacune d'un côté par rapport à la première partie, symétriquement, sous l'influence de ces cambrures.

Ainsi, on confère une cambrure naturelle à la première couche et à la seconde couche, qui tend à les positionner dans un plan perpendiculaire à la pale, symétriquement par rapport au plan d'orientation de la première partie (pale), c'est-à-dire dans leur position finale une fois l'aube fabriquée. On minimise donc les contraintes dans les fibres au moment de leur placement dans le moule, avant la densification de la préforme par la matrice polymère. On aboutit donc à une aube comportant moins de contraintes résiduelles générées par son procédé de fabrication.

L'invention concerne également une aube redresseur réalisée en un matériau composite comprenant une matrice polymère renforcée par une structure fibreuse, l'aube comportant une première partie formant une pale, et une seconde partie située à une extrémité de la première partie et formant une plateforme s'étendant dans un plan sensiblement perpendiculaire à la pale.

Selon l'invention la structure fibreuse est caractérisée en ce que tous les éléments fibreux formant la structure fibreuse sont continus, et en ce que la région de la structure fibreuse formant la seconde partie comporte une première couche s'étendant dans ce plan d'un côté de la pale et en avant du bord avant de la pale, et une seconde couche s'étendant dans ce plan d'un côté de la pale et en avant du bord avant de la pale, sensiblement symétriquement de la première couche par rapport à la pale, de telle sorte qu'une région de la première couche recouvre une région de la seconde couche en avant du bord avant de la pale.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1A est une vue schématique en perspective de la structure fibreuse d'une aube selon l'invention, partiellement construite,
- la figure 1B est une vue schématique en perspective de la structure fibreuse d'une aube selon l'invention, avant son pliage,
- la figure 1C est une vue schématique en perspective de la structure fibreuse d'une aube selon l'invention, pendant son pliage,
- la figure 1D est une vue schématique en perspective de la structure fibreuse d'une aube selon l'invention, après son pliage,
- la figure 2A est une vue schématique en perspective de la structure fibreuse d'un autre mode de réalisation d'une aube selon l'invention, partiellement construite,
- la figure 2B est une autre vue schématique en perspective de la structure fibreuse d'un autre mode de réalisation d'une aube selon l'invention, partiellement construite,
- la figure 2C est une vue schématique en perspective de la structure fibreuse d'un autre mode de réalisation d'une aube selon l'invention, avant son pliage,
- la figure 2D est une vue schématique en perspective de la structure fibreuse d'un autre mode de réalisation d'une aube selon l'invention, pendant son pliage,
- la figure 2E est une vue schématique en perspective de la structure fibreuse d'un autre mode de réalisation d'une aube selon l'invention, après son pliage,
- la figure 3A est une vue en coupe selon la ligne IIIA-IIIA de la figure 1B, montrant une section de la première partie de la structure fibreuse d'une aube selon l'invention,
- la figure 3B est une vue en coupe selon la ligne IIIB-IIIB de la figure 1B, montrant une autre section de la première partie de la structure fibreuse d'une aube selon l'invention,
- la figure 3C est une vue en coupe selon la ligne IIIC-IIIC de la figure 1B, montrant une section de la seconde partie de la structure fibreuse d'une aube selon l'invention,
- la figure 4 est une vue en coupe selon la ligne IV-IV de la figure 2C, montrant une section de la seconde partie de la structure fibreuse d'un autre mode de réalisation d'une aube selon l'invention,
- la figure 5 est une vue en perspective et en coupe d'une aube redresseur selon l'art antérieur.

Dans la description qui suit, les faces référencées F₄₁ et F₅₁ désignent des faces intermédiaires de la construction d'une aube selon l'invention.

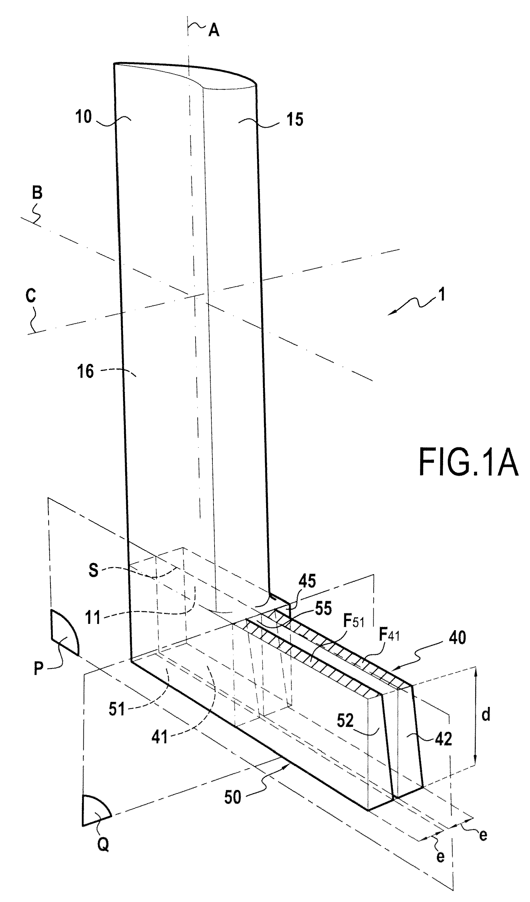

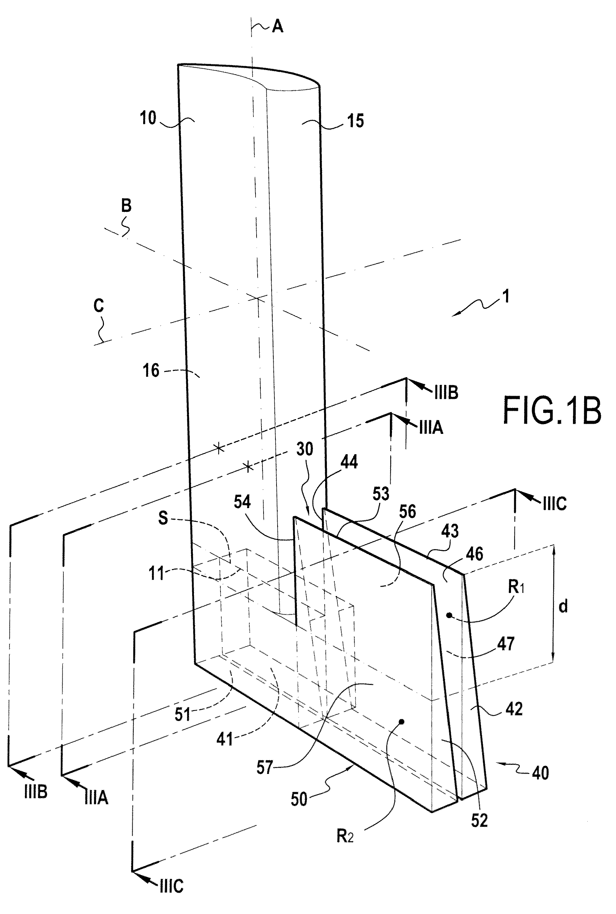

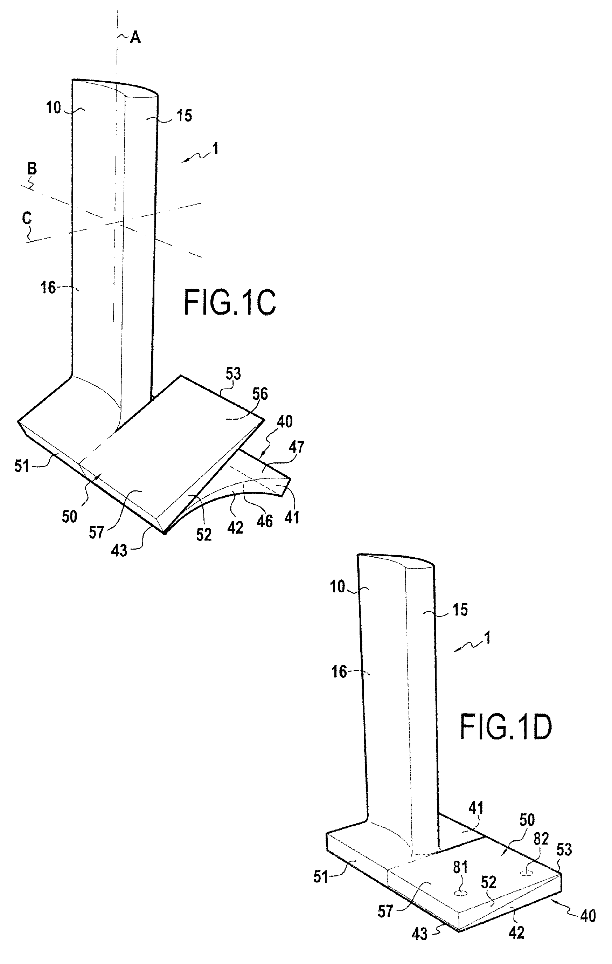

Des étapes du procédé de fabrication d'une aube redresseur selon l'invention sont illustrées schématiquement sur les figures 1A, 1B, 1C, 1D, et 1E. La préforme 1 est une structure fibreuse constituée d'éléments fibreux. Ces éléments fibreux peuvent être par exemple des fibres, des câbles, des microfibres tressées. Les fibres peuvent être n'importe quelle fibre de renfort, par exemple des fibres de carbone, des fibres de verre, des fibres de kevlar, ou une combinaison de ces fibres. Dans la description qui suit, la préforme est élaborée par tissage 3D des fibres. Alternativement, elle peut être élaborée par tressage 3D des fibres.

Comme représenté sur la figure 1A, la préforme 1 comprend une première partie 10 destinée à former la pale de l'aube redresseur. La plus grande direction de la première partie 10 est selon un axe longitudinal A, la première partie 10 ayant une forme légèrement incurvée autour de l'axe A. La largeur de la première partie 10 est selon un axe transversal B perpendiculaire à l'axe A, et l'épaisseur de la première partie 10 est selon un axe C perpendiculaire aux axes A et B. L'épaisseur de la première partie 10 étant faible devant sa largeur et la longueur, la première partie 10 a sensiblement la forme d'une plaque incurvée s'étendant sensiblement dans un plan défini par les axes A et B.

On tisse la première partie 10 jusqu'à ce que sa longueur selon l'axe A soit sensiblement égale à la dimension radiale désirée de l'aube redresseur fabriquée. Les fils (fibres) de chaine sont selon l'axe A, les fils (fibres) de trame sont selon l'axe B. La première partie 10 s'étend donc, dans la direction de l'axe transversal B, entre un bord avant 15 et un bord arrière 16. La première partie 10 s'étend, dans la direction de l'axe longitudinal A, entre deux extrémités longitudinales.

Le tissage est effectué avec un métier à tisser de type Jacquard sur lequel sont montés les fils de chaîne orientés selon l'axe A et qui s'étendent sur plusieurs couches superposées selon l'axe C, et les fils de trame orientés selon l'axe B et définissant ces couches superposées. La navette du métier à tisser, qui porte les fils de trame, fait des allers-retours selon l'axe B pour passer au-dessus ou en-dessous des fils de chaîne.

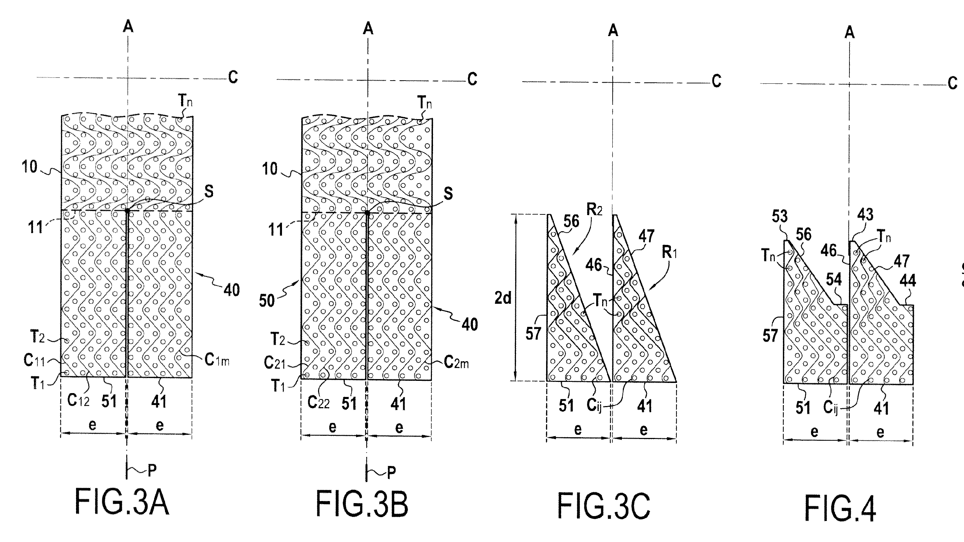

Les parties supérieures des figures 3A et 3B montrent des sections dans le plan AC (défini par les axes A et C) de la première partie 10.

Sur la figure 3A, les fils de trame T₁ à Tₙ (perpendiculaires au plan de ces figures) sont disposés en quinconce, définissant ainsi plusieurs couches. Les fils de chaîne C₁₁ à C₁ₘ ondulent de façon à relier entre elles plusieurs de ces couches. Les fils de chaîne C₁₁ à C₁ₘ sont décalés selon l'axe B de façon à renforcer la cohésion de la préforme.

La figure 3B représente une section dans un plan parallèle au plan de coupe de la figure 3A et décalé par rapport à ce plan selon l'axe B. On note que les fils de chaîne C₂₁ à C₂ₘ sont décalés selon l'axe C par rapport aux fils de chaîne C₁₁ à C₁ₘ de telle sorte que les fils de trame T₁ à Tₙ passent alternativement d'un côté et de l'autre de fils de chaîne. De la sorte, le tissage d'une préforme avec une bonne cohésion est réalisé.

Par souci de clarté, le nombre de fils de chaîne et de fils de trame représentés sur les figures 3A et 3B a été réduit.

On précise que les agencements de fils de chaîne et de fils de trame selon les figures 3A et 3B illustrent les principes généraux du tissage d'une préforme selon l'invention, à savoir le fait que les fils de chaîne relient plusieurs couches superposées de fils de trame, et le fait que ces liaisons varient d'un plan à l'autre perpendiculairement à la direction de fils de trame. Ainsi, on comprend que les figures 3A et 3B ne montrent qu'un agencement possible de fils de chaîne/trame parmi d'autres agencements respectant ces principes généraux de tissage. D'autres agencements de tissage selon l'invention sont donc possibles.

A une extrémité longitudinale 11 de la première partie 10, on effectue un déliage des fils de chaîne, de telle sorte qu'on créé à cette extrémité longitudinale 11 une première excroissance de structure fibreuse en 3D et une seconde excroissance de structure fibreuse en 3D. Cette séparation de la première partie 10 de la structure fibreuse en deux excroissances s'effectue uniquement par déliage des fils, sans coupe de fils, comme expliqué ci-dessous. Ainsi, l'intégrité structurelle de la préforme 1 est conservée.

On continue ensuite à tisser séparément chacune de ces excroissances, de façon à prolonger la première excroissance en une première couche 40 de structure fibreuse en 3D, et à prolonger la seconde excroissance en une seconde couche 50 de structure fibreuse en 3D. La première couche 40 et la seconde couche 50 sont séparées par un plan P défini par l'axe longitudinal A et l'axe transversal B. L'endroit où la première couche 40 et la seconde couche 50 se rejoignent, est un segment S, parallèle à l'axe B et contenu dans le plan P. La première couche 40 et la seconde couche 50 sont d'épaisseur (selon l'axe C) sensiblement égales, de telle sorte que le plan P se situe à mi-épaisseur de la première partie 10. La première couche 40 et la seconde couche 50 ont chacune une épaisseur e égale à la moitié de l'épaisseur de la première partie 10.

Les parties inférieures des figures 3A et 3B illustrent le principe de ce déliage des fils de chaîne. En dessous du segment S, on diminue l'amplitude des ondulations des fils de chaîne de telle sorte qu'aucun de ces fils de chaîne ne traverse le plan P. On comprend donc qu'il est nécessaire d'utiliser deux navettes de fils de trame, chaque navette tissant la première couche 40 ou la seconde couche 50.

On continue à tisser la première couche 40 de telle sorte qu'elle se prolonge selon l'axe longitudinal A sur une certaine distance depuis le segment S, sur toute la largeur de la première partie 10 selon l'axe B et au-delà du bord avant 15 selon l'axe B, de façon à ce que la préforme 1 ait, dans le plan P, la forme d'un L. La première couche 40 se termine donc, dans la direction de l'axe longitudinal A par une première face 41 qui s'étend selon l'axe transversal B, et par une deuxième face 42 qui s'étend selon l'axe longitudinal A depuis la première face 41 jusqu'au niveau de la ligne prolongeant le segment S. L'extrémité de la première couche 40 est donc bordée, dans le plan P, par trois côtés: la première face 41, la deuxième face 42, et une face F₄₁, parallèle à la première face 41, et qui se situe dans le prolongement du segment S. La face F₄₁ s'étend donc depuis la deuxième face 42 jusqu'à proximité du bord avant 15.

Les fils de trame de la première couche 40 s'étendent donc du bord arrière 16 à la deuxième face 42.

De façon similaire, on continue à tisser la seconde couche 50, de façon qu'elle forme une couche de même forme que la première couche 40 et en regard de celle-ci. Cette seconde couche 50 est donc tout d'abord prolongée selon l'axe longitudinal A jusqu'à une première face 51 dans le même plan que la première face 41, sur toute la largeur de la première partie 10 et au delà dans la direction de l'axe transversal B jusqu'au niveau de la deuxième face 42 de la première couche 40, définissant ainsi une deuxième face 52 dans le même plan que cette deuxième face 42.

Cette deuxième face 52 s'étend selon l'axe longitudinal A depuis la première face 51 jusqu'au niveau de la ligne prolongeant le segment S. L'extrémité de la seconde couche 50 est donc bordée, dans le plan P, par trois côtés: la première face 51, la deuxième face 52, et une face F₅₁ coplanaire avec la face F₄₁.

Les fils de trame de la seconde couche 50 s'étendent donc du bord arrière 16 à la deuxième face 52.

On aboutit ainsi à l'aube représentée sur la figure 1A.

On prolonge ensuite par tissage la première couche 40 depuis la face F₄₁, selon la direction de l'axe longitudinal A, de façon ce que la préforme 1 ait, dans le plan P, la forme d'un J. Ce prolongement s'effectue sur une distance d qui est sensiblement égale à la distance entre le segment S et la première face 41.

Ainsi, l'extrémité de la première couche 40 est dorénavant bordée, dans le plan P, par trois côtés: la deuxième face 42, une troisième face 43 qui s'étend parallèlement à l'ancienne face F₄₁ depuis la deuxième face 42 jusqu'à proximité du bord avant 15, et une quatrième face 44 qui s'étend, juste en avant du bord avant 15, parallèlement à la deuxième face 42 depuis l'ancienne face F₄₁ jusqu'à la troisième face 43 (voir figure 1B).

En pratique, le prolongement de la première couche 40 depuis la face F₄₁ est effectué en utilisant des fils de chaîne qui s'étendent de la première face 41 jusqu'à la troisième face 43. La navette des fils de trame de l'extrémité de la première couche 40 effectue donc des va-et-vient entre la quatrième face 44 et la deuxième face 42, sans rejoindre les fils de trame de la première partie 10 de l'aube.

Ainsi, le plan Q étant défini comme perpendiculaire à l'axe B et situé juste en avant du bord avant 15 (voir figure 1A), les fils de trame de l'extrémité de la première couche 40 ne traversent pas le plan Q.

De façon similaire, on continue à tisser la seconde couche 50, de façon qu'elle forme une couche de même forme que la première couche 40 et en regard de celle-ci. Ainsi, l'extrémité de la seconde couche 50 est bordée, dans le plan P, par trois côtés: une deuxième face 52 coplanaire avec la deuxième face 42 de la première couche 40, une troisième face 53 coplanaire avec la troisième face 43 de la première couche 40, et une quatrième face 54 coplanaire avec la quatrième face 44 de la première couche 40 (voir figure 1B).

En pratique, le prolongement de la seconde couche 50 depuis la face F₅₁ est effectué en utilisant des fils de chaîne qui s'étendent de la première face 51 jusqu'à la troisième face 53. La navette des fils de trame effectue donc des va-et-vient entre la quatrième face 54 et la deuxième face 52, sans traverser le plan Q.

La première couche 40 et la seconde couche 50 constituent la deuxième partie 20 de la préforme 1, qui est destinée à former la plateforme de l'aube redresseur. L'espace délimité par le bord avant 15, et les quatrièmes faces 44 et 54 forme un canal 30 qui sépare la deuxième partie 20 de la première partie 10. La région de la première couche 40 en avant du plan Q et délimitée par la première face 41, la deuxième face 42, la troisième face 43, et la quatrième face 44, constitue la première région R₁.

La région de la seconde couche 50 en avant du plan Q et délimitée par la première face 51, la deuxième face 52, la troisième face 53, et la quatrième face 54, constitue la seconde région R₂.

La première région R₁ et la seconde région R₂ sont destinées à se recouvrir entièrement de façon à reconstituer la partie de la plate-forme en avant du bord avant 15 de la pale, comme expliqué ci-dessous.

La plate-forme doit avoir une épaisseur constante, il est donc nécessaire que l'épaisseur de la première région R₁ et l'épaisseur de la seconde région R₂ varient.

Ainsi, l'épaisseur de la première région R₁ diminue linéairement depuis l'épaisseur e au niveau de la première face 41, jusqu'à une épaisseur presque nulle au niveau de la troisième face 43.

On appelle première face intérieure 46 la face de première région R₁ qui est en vis-à-vis de la seconde région R₂, c'est-à-dire dans le plan P. On appelle première face extérieure 47 la face de première région R₁ qui est à l'opposé de la première face intérieure 46. La diminution d'épaisseur de la première région R₁ s'effectue par rapprochement vers le plan P de la première face extérieure 47. La première face intérieure 46 reste dans le plan P, perpendiculaire à la première face 41. La géométrie de la première région R₁ est illustrée en figure 1B.

Cette diminution sensiblement linéaire d'épaisseur est donc obtenue par déliage, selon un procédé connu de l'homme de l'art (un exemple d'un tel procédé est donné dans la demande de brevet européen EP 1,526,285). On diminue l'amplitude des fils de chaîne Cᵢⱼ au fur et à mesure que l'on progresse de la première face 41 vers la troisième face 43 de telle sorte que les fils de chaîne traversent moins de couches de fils de trame Tₙ. Simultanément, on diminue le nombre d'allers-retours de la navette de fils de trame. Cette situation est illustrée sur la figure 3C, qui montre une section dans le plan AC de la première région R₁.

Cette diminution d'épaisseur implique qu'il existe une variation d'épaisseur de la préforme au niveau du plan Q lorsqu'on passe (selon l'axe B) de la région de la première couche 40 située dans le prolongement de la pale (première partie 10) à la première région R₁. En effet, parallèlement au plan Q, la région de la première couche 40 située dans le prolongement de la pale est de section rectangulaire, alors que la première région R₁ est de section trapézoïdale. La variation d'épaisseur de la première couche 40 au niveau du plan Q définit un premier rebord 45 parallèle à la deuxième face 42 (voir figure 1A). Cette diminution d'épaisseur est obtenue par déliage : on diminue l'amplitude des fils de chaîne de l'autre côté du plan Q, et les fils de trame provenant de la région de la première couche 40 située dans le prolongement de la pale reviennent au arrière au niveau du plan Q pour définir le premier rebord 45.

De façon similaire, l'épaisseur de la seconde région R₂ diminue linéairement depuis l'épaisseur e au niveau de la première face 51, jusqu'à une épaisseur presque nulle au niveau de la troisième face 53. On appelle seconde face intérieure 56 la face de seconde région R₂ qui est en vis-à-vis de la première région R₁. On appelle seconde face extérieure 57 la face de seconde région R₂ qui est à l'opposé de la seconde face intérieure 56. La diminution d'épaisseur de la première région R₁ s'effectue par rapprochement de la seconde face intérieure 56 vers la seconde face extérieure 57. La seconde face extérieure 57 reste dans un plan parallèle au plan P, perpendiculaire à la première face 51. La géométrie de la seconde région R₂ est illustrée en figure 1B.

Cette diminution sensiblement linéaire d'épaisseur est donc obtenue par déliage, comme pour la première région R₁. On diminue l'amplitude des fils de chaîne Cᵢⱼ au fur et à mesure que l'on progresse de la première face 51 vers la troisième face 53 de telle sorte que les fils de chaîne traversent moins de couches de fils de trame Tₙ. Simultanément, on diminue le nombre d'allers-retours de la navette de fils de trame. Cette situation est illustrée sur la figure 3C, qui montre une section dans le plan AC de la seconde région R₂.

Cette diminution d'épaisseur implique qu'il existe une variation d'épaisseur de la préforme au niveau du plan Q lorsqu'on passe (selon l'axe B) de la région de la seconde couche 50 située dans le prolongement de la pale (première partie 10) à la seconde région R₂. La variation d'épaisseur de la seconde couche 50 au niveau du plan Q définit un second rebord 55 parallèle à la deuxième face 52 (voir figure 1A). Cette diminution d'épaisseur est obtenue par déliage, de façon similaire au déliage de la première région R₁.

La figure 1B montre l'aube terminée, avant son pliage.

L'étape suivante dans le procédé de fabrication de l'aube redresseur consiste à replier la première couche 40 et la seconde couche 50 comme décrit ci-dessous.

On fait pivoter la première couche 40 autour du segment S en éloignant le premier bord 41 du plan P, jusqu'à ce que la première couche 40 se situe dans un plan perpendiculaire à la première partie 10, c'est-à-dire un plan défini par l'axe transversal B et l'axe d'épaisseur C. Une moitié de la première région R₁ (la moitié délimitée par l'ancienne face F₄₁, la deuxième face 42, la troisième face 43, et la quatrième face 44) passe donc de l'autre côté de la première partie 10 (c'est-à-dire de l'autre côté du plan défini par les axes A et B).

De façon similaire, on fait pivoter la seconde couche 50 autour du segment S en éloignant le premier bord 51 du plan P, c'est à dire en sens opposé du sens de rotation de la première couche 40, jusqu'à ce que la seconde couche 50 se situe dans un plan perpendiculaire à la première partie 10, c'est-à-dire le même plan où se trouve maintenant la première couche 40. Une moitié de la seconde région R₂ (la moitié délimitée par l'ancienne face F₅₁, la deuxième face 52, la troisième face 53, et la quatrième face 54) passe donc de l'autre côté de la première partie 10.

Le segment S joue donc le rôle d'une charnière autour de laquelle la première couche 40 et la seconde couche 50 pivotent, en sens opposé l'une de l'autre, d'un angle d'une amplitude de 90°. La figure 1C montre la première couche 40 et la seconde couche 50 à une étape intermédiaire de leur pivotement.

On comprend donc qu'à l'issue de ce processus de pivotement, la première région R₁ de la première couche 40 se retrouve en regard de la seconde région R₂ de la seconde couche 50 dans le plan défini par l'axe transversal B et l'axe d'épaisseur C. De la sorte, la première couche 40 et la seconde couche 50 se recouvrent mutuellement sur l'étendue de la première région R₁ et de la seconde région R₂, pour former une nouvelle couche d'épaisseur e, comme représenté sur la figure 1D. La face extérieure 47 se retrouve donc entièrement en contact avec la face intérieure 56. La quatrième face 44 se retrouve en contact avec le second rebord 55, et la quatrième face 54 se retrouve en contact avec le premier rebord 45.

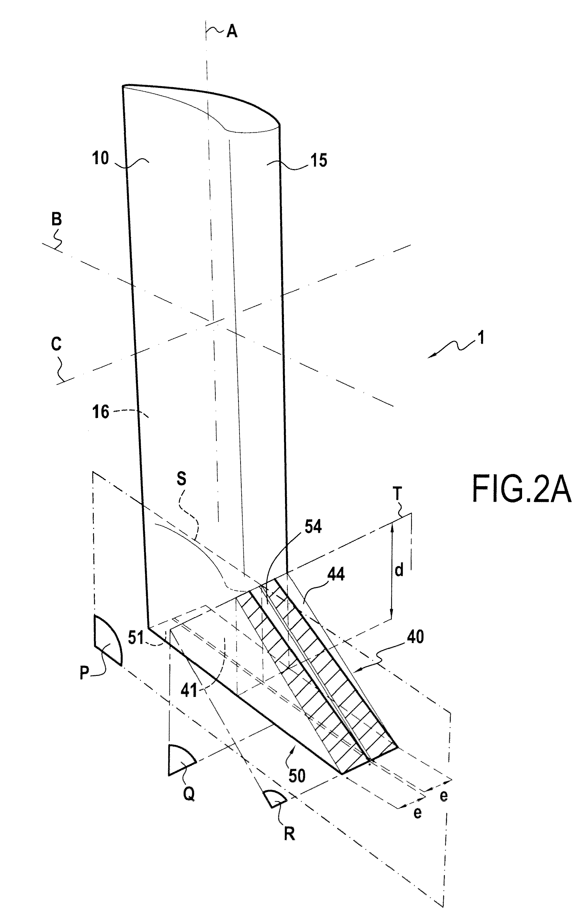

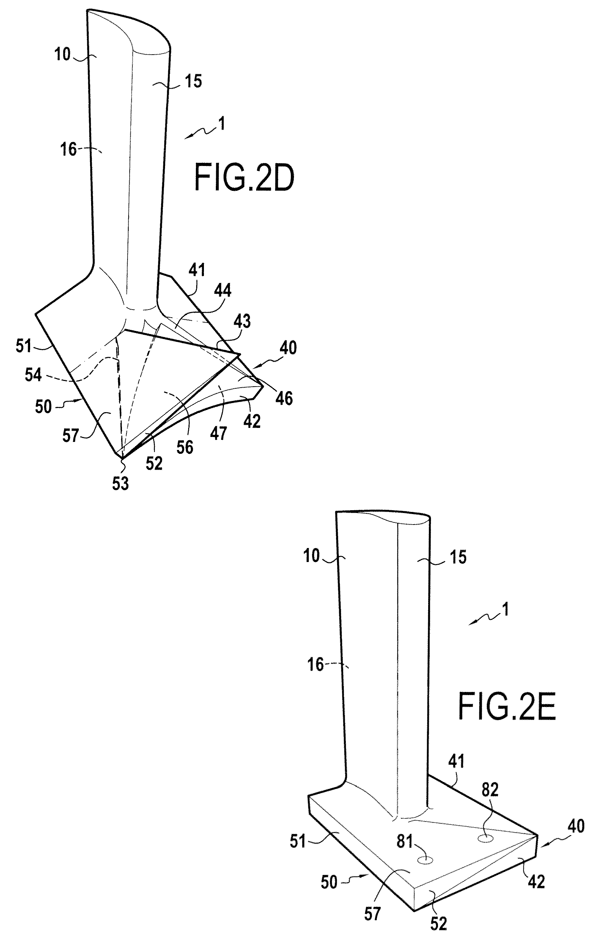

Par analogies aux figures 1A à 1D, les figures 2A à 2E montrent des étapes du procédé de fabrication d'une aube redresseur selon un autre mode de réalisation de l'invention.

Comme illustré sur la figure 2A, le tissage de la première partie 10, de la première couche 40, et de la seconde couche 50 jusqu'au plan Q, et le déliage de la première couche 40 et de la seconde couche 50, sont effectués de façon identique par rapport au mode de réalisation illustré sur la figure 1A.

Les figures 3A et 3B illustrent donc également le présent mode de réalisation.

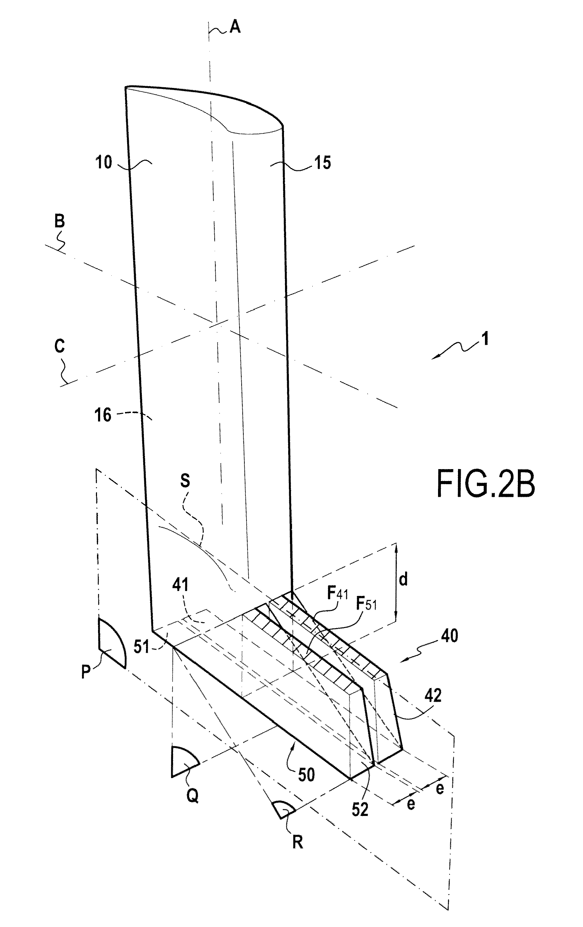

Ainsi, on continue à tisser la première couche 40 de telle sorte qu'elle se prolonge selon l'axe longitudinal A sur une certaine distance depuis le segment S, sur toute la largeur de la première partie 10 selon l'axe B et au-delà du plan Q selon l'axe B, de façon à ce que la préforme 1 ait, dans le plan P, la forme d'un L. La première couche 40 se termine donc, dans la direction de l'axe longitudinal A par une première face 41 qui s'étend selon l'axe transversal B, et par une deuxième face 42 qui s'étend selon l'axe longitudinal A depuis la première face 41 jusqu'au niveau de la ligne prolongeant le segment S, comme illustré sur la figure 2B. L'extrémité de la première couche 40 est donc bordée, dans le plan P, par trois côtés: la première face 41, la deuxième face 42, et une face F₄₁, parallèle à la première face 41, et qui se situe dans le prolongement du segment S. La face F₄₁ s'étend donc depuis la deuxième face 42 jusqu'à proximité du bord avant 15. Les fils de trame de la première couche 40 s'étendent donc du bord arrière 16 à la deuxième face 42.

De façon similaire, on continue à tisser la seconde couche 50 comme la première couche 40 de façon à ce que la préforme 1 ait, dans le plan P, la forme d'un L. La seconde couche 50 se termine donc, dans la direction de l'axe longitudinal A par une première face 51 dans le même plan que la première face 41, sur toute la largeur de la première partie 10 et au delà dans la direction de l'axe transversal B jusqu'au niveau de la deuxième face 42 de la première couche 40, définissant ainsi une deuxième face 52 dans le même plan que cette deuxième face 42.

Cette deuxième face 52 s'étend selon l'axe longitudinal A depuis la première face 51 jusqu'au niveau de la ligne prolongeant le segment S.

L'extrémité de la seconde couche 50 est donc bordée, dans le plan P, par trois côtés: la première face 51, la deuxième face 52, et une face F₅₁, parallèle à la première face 51, et qui se situe dans le prolongement du segment S. La face F₅₁ s'étend donc depuis la deuxième face 52 jusqu'à proximité du bord avant 15. Les fils de trame de la seconde couche 50 s'étendent donc du bord arrière 16 à la deuxième face 52.

On aboutit ainsi à l'aube représentée sur la figure 2B.

Cependant, à la différence du mode de réalisation illustré sur les figures 1A à 1D, la première couche 40 subit une variation d'épaisseur non pas au niveau du plan Q, mais au niveau d'un plan R défini comme suit : le plan R est obtenu par pivotement du plan Q autour d'un axe T parallèle à l'axe C, qui est contenu dans le plan Q et qui coupe le segment S. Ce plan R est incliné par rapport au plan Q de telle sorte qu'il passe par le segment intersection de la première face 41 et de la deuxième face 42. La région de la première couche 40 située entre le plan Q, le plan R, et la face 42 forme donc, dans le plan P, un triangle rectangle dont l'hypoténuse est dans le plan Q (voir figure 2A).

La variation d'épaisseur au niveau du plan R est décrite ci-après. Sur la face du plan R du côté de la première face 41, la première couche 40 a une section sensiblement rectangulaire, et a une épaisseur uniforme égale à e. Le rectangle de cette section a un côté de longueur e sur l'axe T, et un côté opposé de longueur e sur le segment intersection de la première face 41 et de la deuxième face 42. Ces deux côtés sont reliés par un côté situé dans le plan P, et un côté parallèle à ce dernier côté. Sur l'autre face du plan R, la première couche 40 a une section trapézoïdale, le trapèze formant cette section étant définit comme suit : il a en commun avec le rectangle (de la section sur l'autre face du plan R) son côté de longueur e sur le segment intersection de la première face 41 et de la deuxième face 42, et son côté situé dans le plan P. Le long de l'axe T, le trapèze a un côté de longueur égale à e/2, qui est relié au côté opposé par un côté oblique. Le trapèze a donc une largeur selon l'axe C qui varie linéairement entre e et e/2.

La variation d'épaisseur de la première couche 40 au niveau du plan R est donc maximale, égale à e/2, au niveau de l'axe T, et égale à zéro au niveau de la deuxième face 42. La variation d'épaisseur de la première couche 40 au niveau du plan R définit un premier rebord 44 (voir figure 2A). Cette diminution d'épaisseur est obtenue par déliage : on diminue l'amplitude des fils de chaîne Cᵢⱼ en provenance de la première face 41 lorsqu'on traverse le plan R, de telle sorte que les fils de chaîne traversent moins de couches de fils de trame Tₙ. Simultanément, les fils de trame provenant de la région de la première couche 40 située dans le prolongement de la pale reviennent en arrière au niveau du plan R pour définir le premier rebord 45. Cette situation est illustrée sur la figure 4, qui montre une section dans le plan AC de la première couche 40.

De façon similaire, la seconde couche 50 subit une variation d'épaisseur au niveau d'un plan R, passant d'une section rectangulaire à une section trapézoïdale. Le trapèze formant cette section est défini comme suit : il a en commun avec le rectangle (de la section sur l'autre face du plan R) son côté de longueur e sur le segment intersection de la première face 41 et de la deuxième face 42, et son côté opposé au côté situé dans le plan P. Le long de l'axe T, le trapèze a un côté de longueur égale à e/2, qui est relié au côté opposé par un côté oblique. Le trapèze a donc une largeur selon l'axe C qui varie linéairement entre e et e/2. Le trapèze de la seconde couche 50 et le trapèze de la première couche 40 sont donc superposables.

La variation d'épaisseur de la seconde couche 50 au niveau du plan R définit un second rebord 54 (voir figure 2A). Cette diminution d'épaisseur est obtenue par déliage, comme dans le cas de la première couche 40. Cette situation est illustrée sur la figure 4, qui montre une section dans le plan AC de la seconde couche 50.

A partir de la face F₄₁, on prolonge ensuite par tissage la première couche 40 selon la direction de l'axe longitudinal A, de façon ce que la préforme 1 ait, dans le plan P, la forme d'un J. La distance de laquelle la première couche 40 est prolongée selon l'axe A depuis la face F₄₁ varie linéairement entre l'extrémité de la face F₄₁ située au segment T, et l'extrémité opposée de la face F₄₁ (au niveau de la deuxième face 42). Ainsi, la première couche 40 n'est pas prolongée au niveau du segment T, et est prolongée au niveau de la deuxième face 42 d'une distance d. La distance d est la distance entre la face F₄₁ et la première face 41. L'extrémité de la première couche 40 est donc délimitée par une troisième face 43 qui s'étend depuis la deuxième face 42 jusqu'au segment T. La face F₄₁, la deuxième face 42, et la troisième face 43 délimitent, dans le plan P, un triangle rectangle dont l'hypoténuse est la troisième face 43.

En pratique, le prolongement de la première couche 40 depuis la face F₄₁ est effectué en utilisant des fils de chaîne qui s'étendent de la première face 41 jusqu'à la troisième face 43. La navette des fils de trame de l'extrémité de la première couche 40 effectue donc des va-et-vient entre la troisième face 43 et la deuxième face 42.

De façon similaire, on continue à tisser la seconde couche 50 depuis la face F₅₁, selon la direction de l'axe longitudinal A, de façon qu'elle forme une couche de même forme que la première couche 40 et en regard de celle-ci. Ainsi, la seconde couche 50 n'est pas prolongée au niveau du segment T, et est prolongée au niveau de la deuxième face 52 d'une distance d. L'extrémité de la seconde couche 50 est délimitée par une troisième face 53 qui s'étend depuis la deuxième face 52 jusqu'au segment T. La face F₅₁, la deuxième face 52, et la troisième face 53 délimitent, dans un plan parallèle au plan P, un triangle rectangle dont l'hypoténuse est la troisième face 53.

Le prolongement de la seconde couche 50 depuis la face F₅₁ s'effectue par tissage de façon identique au cas de la première couche 40.

La première couche 40 et la seconde couche 50 constituent la deuxième partie 20 de la préforme 1, qui est destinée à former la plateforme de l'aube redresseur.

La région de la première couche 40 délimitée par le plan R, la deuxième face 42, et la troisième face 43, constitue la première région R₁.

La région de la seconde couche 50 délimitée par le plan R, la deuxième face 52, et la troisième face 53, constitue la seconde région R₂.

La première région R₁ et la seconde région R₂ sont destinées à se recouvrir entièrement, contribuant ainsi à reconstituer la partie de la plate-forme en avant du bord avant 15 de la pale, comme expliqué ci-dessous.

La plate-forme doit avoir une épaisseur constante, il est donc nécessaire que l'épaisseur de la première région R₁ et l'épaisseur de la seconde région R₂ varient, comme expliqué ci-dessous.

On appelle première face intérieure 46 la face de la première région R₁ qui est en vis-à-vis de la seconde région R₂, c'est-à-dire dans le plan P. On appelle première face extérieure 47 la face de première région R₁ qui est à l'opposé de la première face intérieure 46.

L'épaisseur de la première région R₁ le long de la deuxième face 42 diminue linéairement depuis l'épaisseur e (au niveau de la première face 41) jusqu'à une épaisseur presque nulle à une distance 2xd mesurée selon l'axe A depuis la première face 41. La deuxième face 42 est donc un triangle.

L'épaisseur de la première région R₁ le long de la troisième face 43 diminue linéairement depuis une épaisseur sensiblement égale à e/2 au niveau du segment T, jusqu'à une épaisseur presque nulle à l'endroit où la troisième face 43 rejoint la deuxième face 42. La troisième face 43 est donc un triangle dont un des sommets est commun avec un sommet de la deuxième face 42. Ce sommet est appelé S₁.

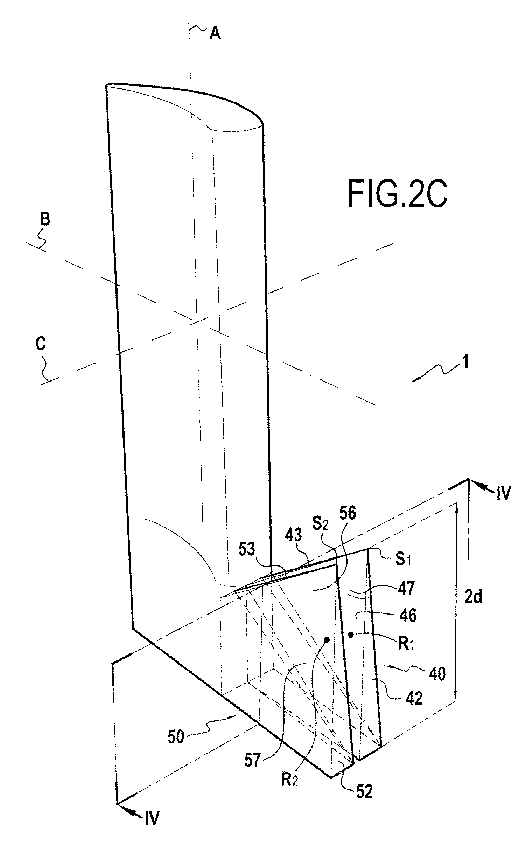

La deuxième face 42, la troisième face 43, la première face intérieure 46 et la première face extérieure 47 forment donc une pyramide dont la base trapézoïdale est située dans le plan R, et le sommet est S₁. La géométrie de la première région R₁ est illustrée en figure 2C.

La diminution sensiblement linéaire d'épaisseur de la première région R₁ est obtenue par déliage. On diminue l'amplitude des fils de chaîne Cᵢⱼ au fur et à mesure que l'on progresse du plan R vers la troisième face 53 de telle sorte que les fils de chaîne traversent moins de couches de fils de trame Tₙ. Simultanément, on diminue le nombre d'allers-retours de la navette de fils de trame. Cette situation est illustrée sur la figure 4, qui montre une section dans le plan AC de la première région R₁.

L'épaisseur de la seconde région R₂ varie de façon identique à l'épaisseur de la première région R₁.

On appelle seconde face intérieure 56 la face de la seconde région R₂ qui est en vis-à-vis de la première région R₁. On appelle seconde face extérieure 57 la face de seconde région R₂ qui est à l'opposé de la seconde face intérieure 56. La seconde face extérieure 57 se situe dans un plan parallèle au plan P, perpendiculaire à la première face 41.

L'épaisseur de la seconde région R₂ le long de la deuxième face 52 diminue linéairement depuis l'épaisseur e (au niveau de la première face 51) jusqu'à une épaisseur presque nulle à une distance 2xd mesurée selon l'axe A depuis la première face 51. La deuxième face 52 est donc un triangle.

L'épaisseur de la seconde région R₂ le long de la troisième face 53 diminue linéairement depuis une épaisseur sensiblement égale à e/2 au niveau du segment T, jusqu'à une épaisseur presque nulle à l'endroit où la troisième face 53 rejoint la deuxième face 52. La troisième face 53 est donc un triangle dont un des sommets est commun avec un sommet de la deuxième face 52. Ce sommet est appelé S₂.

La deuxième face 52, la troisième face 53, la seconde face intérieure 56 et la seconde face extérieure 57 forment donc une pyramide dont la base trapézoïdale est située dans le plan R et le sommet est S₂. La géométrie de la seconde région R₂ est illustrée en figure 2C.

La diminution sensiblement linéaire d'épaisseur de la seconde région R₂ est obtenue par déliage, comme pour la première région R₁. Cette situation est illustrée sur la figure 4, qui montre une section dans le plan AC de la seconde région R₂.

La figure 2C montre l'aube terminée, avant son pliage.

L'étape suivante dans le procédé de fabrication de l'aube redresseur consiste à replier la première couche 40 et la seconde 50 comme décrit ci-dessous.

On fait pivoter la première couche 40 autour du segment S en éloignant le premier bord 41 du plan P, jusqu'à ce que la première couche 40 se situe dans un plan perpendiculaire à la première partie 10 et à l'axe A, c'est-à-dire un plan défini par l'axe transversal B et l'axe d'épaisseur C. Une moitié de la première région R₁ (la moitié délimitée par l'ancienne face F₄₁, la deuxième face 42, et la troisième face 43) passe donc de l'autre côté de la première partie 10 (c'est-à-dire de l'autre côté du plan P défini par les axes A et B).

De façon similaire, on fait pivoter la seconde couche 50 autour du segment S en éloignant le premier bord 51 du plan P, c'est à dire en sens opposé du sens de rotation de la première couche 40, jusqu'à ce que la seconde couche 50 se situe dans un plan perpendiculaire à la première partie 10, c'est-à-dire le même plan où se trouve maintenant la première couche 40. Une moitié de la seconde région R₂ (la moitié délimitée par l'ancienne face F₅₁, la deuxième face 52, et la troisième face 53) passe donc de l'autre côté du plan P.

Le segment S joue donc le rôle d'une charnière autour de laquelle la première couche 40 et la seconde couche 50 pivotent, en sens opposé l'une de l'autre, d'un angle d'une amplitude de 90°. Ces deux couches occupent donc une position symétrique par rapport à la première partie 10.

La figure 2D montre la première couche 40 et la seconde couche 50 à une étape intermédiaire de leur pivotement.

On comprend donc qu'à l'issue de ce processus de pivotement, la première région R₁ de la première couche 40 se retrouve en regard de la seconde région R₂ de la seconde couche 50 dans le plan défini par l'axe transversal B et l'axe d'épaisseur C. De la sorte, la première couche 40 et la seconde couche 50 se recouvrent mutuellement sur l'étendue de la première région R₁ et de la seconde région R₂ pour former une nouvelle couche d'épaisseur e, comme représenté sur la figure 2D. La première face extérieure 47 se retrouve donc entièrement en contact avec la seconde face intérieure 56. La troisième face 43 de la première couche 40 se retrouve entièrement en contact avec le second rebord 54, et la troisième face 53 de la seconde couche 50 se retrouve entièrement en contact avec le premier rebord 44.

Dans les deux modes de réalisation décrits ci-dessus, la première région R₁ vient en contact avec la seconde région R₂ essentiellement dans le plan contenant la face intérieure 56 et la face extérieure 47. La surface où la première couche 40 recouvre la seconde couche 50 est donc essentiellement plane.

Alternativement, le recouvrement de la première région R₁ et de la seconde région R₂ peut s'obtenir en faisant varier l'épaisseur de ces régions de façon non-linéaire (par exemple par paliers), à condition que la somme des épaisseurs de ces régions soit, le long de tout axe parallèle à l'axe A, sensiblement égale. Ainsi, l'épaisseur de cette zone de recouvrement de la première région R₁ et de la seconde région R₂ est sensiblement égale à l'épaisseur (maximale) de la première couche 40 ou de la seconde couche 50, de telle sorte que l'épaisseur de la plateforme, formée à partir de la seconde partie 20 de la structure fibreuse, est sensiblement constante.

Une fois la préforme ainsi conformée dans une forme sensiblement proche de sa forme finale (c'est-à-dire une forme où la plate-forme constituée de la première couche 40 et de la seconde couche 50 est sensiblement perpendiculaire à la pale 10), on place cette préforme dans un moule dont la forme correspond à cette forme finale. Cette préforme est ensuite densifiée par une des techniques connues, et rappelées ci-dessus (imprégnation par voie liquide, ou infiltration chimique en phase vapeur).

Il est décrit ci-dessus un mode de réalisation où la première région R₁ de la première couche 40 recouvre la seconde région R₂ de la seconde couche 50 sur une zone sensiblement rectangulaire constituant toute la partie de la plateforme située en avant du bord avant 15 de la pale.

Il est décrit également un mode de réalisation où la première région R₁ de la première couche 40 recouvre la seconde région R₂ de la seconde couche 50 sur une zone sensiblement triangulaire s'évasant depuis le bord avant 15 de la pale vers l'avant.

D'une manière générale, l'invention concerne une aube où une première région R₁ de la première couche 40 recouvre une seconde région R₂ de la seconde couche 50 en avant du bord avant 15 de la pale. La première couche 40 et la seconde couche 50 sont de volume et de forme sensiblement identiques.

Alternativement, la première couche 40 et la seconde couche 50 peuvent avoir un volume ou une forme différents.

Dans la description ci-dessus, un mode de tissage 3D pour la réalisation de la préforme constituant l'aube selon l'invention a été décrit à titre d'exemple. D'autres modes de tissage 3D peuvent également être utilisés, à condition que la géométrie de la préforme soit respectée.

Avant l'opération de densification, on peut réaliser dans la préforme constituée comme décrit ci-dessus, deux trous 81, 82 d'axe A, traversant la première région R₁ et la seconde région R₂, et situés de part et d'autre du plan P (figure 1D et figure 2D) en avant du bord avant 15 de la pale. Chacun de ces trous peut par exemple être réalisé en écartant les fibres de la préforme au moyen d'un cylindre de diamètre égal à celui du trou, ou en réalisant le tissage autour d'un tel cylindre. La préforme et les cylindres sont ensuite placés dans le moule avec l'opération de densification, de telle sorte que l'aube comporte dans sa plateforme deux trous à l'emplacement de ces cylindres. Les trous 81, 82 sont destinés à recevoir des boulons permettant la solidarisation mécanique de l'aube sur son support.

Avantageusement, les trous 81 et 82 sont positionnés de telle sorte qu'ils traversent chacun à la fois la première couche 40 et la seconde couche 50 (c'est-à-dire qu'ils traversent chacun la première région R₁ et la seconde région R₂). Ainsi, les boulons (ou tout autre dispositif de liaison mécanique) passant dans ces trous contribuent à solidariser la première couche 40 et la seconde couche 50 entre elles, en plus de solidariser la plate-forme sur son support.

L'élaboration de la préforme 1 en une première couche 40 et une seconde couche 50 à l'extrémité longitudinale 11 de la première partie 10, telle que décrite ci-dessus, peut également être effectuée à l'autre extrémité longitudinale de la préforme 1. Ainsi, avant la conformation de la préforme 1 dans le moule, on réalise de façon similaire à la seconde partie 20, une troisième partie située à l'autre extrémité longitudinale de la première partie 10 et destinée à former une autre plateforme. Cette préforme modifiée est alors placée dans un moule apte à la loger, puis est densifiée avec une matrice polymère.

Sur les figures 1A à 1D et 2A à 2E, la première partie 10 a été représentée incurvée autour de l'axe A. D'une manière générale, la première partie 10 peut avoir une forme plus complexe (courbure selon plusieurs axes), selon la forme désirée de la pale.

Dans certaines applications, la première partie 10 comporte un bord d'attaque métallique rapporté sur le bord avant 15.

L'invention concerne également une turbomachine comportant au moins une aube redresseur selon l'invention.

## Revendications

1. Procédé de fabrication d'une aube redresseur **caractérisé en ce qu'**il comprend
(a) l'élaboration par tissage 3D en une seule pièce d'une préforme fibreuse (1) comprenant une première partie (10) s'étendant selon un axe longitudinal (A) et constituant la préforme de la pale de ladite aube, et, à une extrémité longitudinale (11) de ladite première partie (10), une seconde partie (20) constituant la préforme de la plateforme de ladite aube, la seconde partie (20) étant élaborée en une première couche (40) et une seconde couche (50) en regard de la première couche et séparée de ladite première couche (40) par déliage sans coupe lors de l'élaboration de ladite préforme (1),
(b) le pliage de la première couche (40) et de la seconde couche (50) de telle sorte que chacune soit dans un plan perpendiculaire audit axe longitudinal sensiblement symétriquement l'une de l'autre par rapport à ladite première partie (10), et qu'une première région (R₁) de la première couche (40) recouvre une seconde région (R₂) de la seconde couche (50) en avant d'un bord avant (15) de ladite première partie (10),
(c) la conformation de ladite préforme (1) dans un moule, et
(d) la densification de ladite préforme (1) avec une matrice polymère.

2. Procédé selon la revendication 1 **caractérisé en ce que** la première couche (40) et la seconde couche (50) sont de volume et de forme sensiblement identiques.

3. Procédé selon la revendication 1 ou 2 **caractérisé en ce qu'**on réalise une cambrure de la préforme fibreuse de ladite première couche (40) dans une zone adjacente à ladite première partie (10), et une cambrure de la préforme fibreuse de ladite seconde couche (50) dans une zone adjacente à ladite première partie (10), de telle sorte que ladite zone de la première couche (40) et ladite zone de la seconde couche (50) adjacentes à ladite première partie (10) aient tendance à se positionner chacune d'un côté par rapport à cette première partie, symétriquement, sous l'influence de ces cambrures.

4. Procédé selon l'une des revendications 1 à 3 **caractérisé en ce qu'**avant la conformation de ladite préforme (1) dans le moule, on réalise de façon similaire à ladite seconde partie (20), une troisième partie située à l'autre extrémité longitudinale de ladite première partie (10) et destinée à former une autre plateforme.

5. Procédé selon l'une quelconque des revendications 1 à 4 **caractérisé en ce que** ladite première partie (10) comporte un bord d'attaque métallique rapporté sur le dit bord avant (15).

6. Aube redresseur réalisée en un matériau composite comprenant une matrice polymère renforcée par une structure fibreuse en trois dimensions, ladite aube comportant une première partie (10) formant une pale, et une seconde partie (20) située à une extrémité longitudinale de la première partie (10) et formant une plateforme s'étendant dans un plan sensiblement perpendiculaire à ladite pale, ladite structure fibreuse étant **caractérisée en ce que** tous les éléments fibreux formant ladite structure fibreuse sont continus, et **en ce que** la région de la structure fibreuse formant la seconde partie comporte une première couche (40) s'étendant dans ledit plan d'un côté de ladite pale et en avant d'un bord avant (15) de ladite pale, et une seconde couche (50) s'étendant dans ledit plan d'un côté de ladite pale et en avant dudit bord avant (15) de ladite pale, sensiblement symétriquement de ladite première couche (40) par rapport à ladite pale, de telle sorte qu'une première région (R₁) de ladite première couche (40) recouvre une seconde région (R₂) de ladite seconde couche en avant dudit bord avant (15).

7. Aube redresseur selon la revendication 6 **caractérisée en ce que** ladite première couche (40) et ladite seconde couche (50) sont de volume et de forme sensiblement identiques.

8. Aube redresseur selon la revendication 6 ou 7 **caractérisée en ce que** ladite première région (R₁) de la première couche (40) recouvre ladite seconde région (R₂) de la seconde couche (50) sur une zone sensiblement rectangulaire constituant toute la partie de la plateforme située en avant dudit bord avant (15) de la pale.

9. Aube redresseur selon la revendication 6 ou 7 **caractérisée en ce que** ladite première région (R₁) de la première couche (40) recouvre ladite seconde région (R₂) de la seconde couche (50) sur une zone sensiblement triangulaire s'évasant depuis ledit bord avant (15) de la pale vers l'avant.

10. Aube redresseur selon l'une quelconque des revendications 6 à 9 **caractérisée en ce que** la surface où ladite première couche (40) recouvre ladite seconde couche (50) est essentiellement plane.

11. Aube redresseur selon l'une quelconque des revendications 6 à 10 **caractérisée en ce qu'**elle comporte en outre une troisième partie similaire à ladite seconde partie (20) et située à l'autre extrémité longitudinale de ladite première partie (10), ladite troisième partie étant destinée à former une autre plateforme.

12. Aube redresseur selon l'une quelconque des revendications 6 à 11 **caractérisée en ce que** ladite pale comporte un bord d'attaque métallique rapporté sur ledit bord avant (15).

13. Turbomachine comportant au moins une aube redresseur selon l'une quelconque des revendications 6 à 12.

## Patentansprüche

1. Verfahren zur Herstellung einer Leitschaufel, **dadurch gekennzeichnet, dass** es umfasst:
(a) die Herstellung eines Faservorformlings (1) durch einstückiges 3D-Weben, der einen ersten Teil (10), welcher sich entlang einer Längsachse (A) erstreckt und den Vorformling des Blattes der Schaufel bildet, sowie, an einem Längsende (11) des ersten Teils (10), einen zweiten Teil (20), welcher den Vorformling der Plattform der Schaufel bildet, umfasst, wobei der zweite Teil (20) aus einer ersten Schicht (40) und einer zweiten Schicht (50), die der ersten Schicht gegenüberliegt und von der ersten Schicht (40) durch Lösen ohne Schneiden während der Herstellung des Vorformlings (1) getrennt wird, hergestellt ist,
(b) das Biegen der ersten Schicht (40) und der zweiten Schicht (50) derart, dass jede sich in einer Ebene senkrecht zu der Längsachse im Wesentlichen symmetrisch zueinander in Bezug auf den ersten Teil (10) befindet und dass ein erster Bereich (R₁) der ersten Schicht (40) einen zweiten Bereich (R₂) der zweiten Schicht (50) vor einer Vorderkante (15) des ersten Teils (10) überdeckt,
(c) das Formen des Vorformlings (1) in einer Form und
(d) das Verdichten des Vorformlings (1) mit einer Polymermatrix.

2. Verfahren nach Anspruch 1, **dadurch gekennzeichnet, dass** die erste Schicht (40) und die zweite Schicht (50) ein im Wesentlichen gleiches Volumen und eine im Wesentlichen gleiche Form aufweisen.

3. Verfahren nach Anspruch 1 oder 2, **dadurch gekennzeichnet, dass** eine Wölbung des Faservorformlings der ersten Schicht (40) in einem zu dem ersten Teil (10) benachbarten Bereich sowie eine Wölbung des Faservorformlings der zweiten Schicht (50) in einem zu dem ersten Teil (10) benachbarten Bereich hergestellt wird, derart, dass der Bereich der ersten Schicht (40) und der Bereich der zweiten Schicht (50), die zu dem ersten Teil (10) benachbart sind, dazu neigen, sich unter dem Einfluss dieser Wölbungen jeweils auf einer Seite in Bezug auf diesen ersten Teil symmetrisch zu positionieren.

4. Verfahren nach einem der Ansprüche 1 bis 3, **dadurch gekennzeichnet, dass** vor der Formung des Vorformlings (1) in der Form ähnlich dem zweiten Teil (20) ein dritter Teil, welcher sich an dem anderen Längsende des ersten Teils (10) befindet und dazu bestimmt ist, eine weitere Plattform zu bilden, hergestellt wird.

5. Verfahren nach einem der Ansprüche 1 bis 4, **dadurch gekennzeichnet, dass** der erste Teil (10) eine metallische Eintrittskante, welche an die Vorderkante (15) angesetzt ist, umfasst.

6. Leitschaufel, die aus einem Verbundwerkstoff mit einer Polymermatrix, welche durch eine dreidimensionale Faserstruktur verstärkt ist, hergestellt ist, wobei die Schaufel einen ersten Teil (10), welcher ein Blatt bildet, und einen zweiten Teil (20), welcher an einem Längsende des ersten Teils (10) gelegen ist und eine Plattform bildet, die sich in einer zu dem Blatt im Wesentlichen senkrechten Ebene erstreckt, umfasst, wobei die Faserstruktur **dadurch gekennzeichnet ist, dass** alle die Faserstruktur bildenden Faserelemente durchgehend sind und dass der Bereich der Faserstruktur, welcher den zweiten Teil bildet, eine erste Schicht (40), die sich in der Ebene auf einer Seite des Blattes und vor einer Vorderkante (15) des Blattes erstreckt, sowie eine zweite Schicht (50) umfasst, die sich in der Ebene auf einer Seite des Blattes und vor der Vorderkante (15) des Blattes, im Wesentlichen symmetrisch zu der ersten Schicht (40) in Bezug auf das Blatt erstreckt, derart, dass ein erster Bereich (R₁) der ersten Schicht (40) einen zweiten Bereich (R₂) der zweiten Schicht vor der Vorderkante (15) überdeckt.

7. Leitschaufel nach Anspruch 6, **dadurch gekennzeichnet, dass** die erste Schicht (40) und die zweite Schicht (50) ein im Wesentlichen gleiches Volumen und eine im Wesentlichen gleiche Form aufweisen.

8. Leitschaufel nach Anspruch 6 oder 7, **dadurch gekennzeichnet, dass** der erste Bereich (R₁) der ersten Schicht (40) den zweiten Bereich (R₂) der zweiten Schicht (50) über eine im Wesentlichen rechteckige Zone, welche den gesamten vor der Vorderkante (15) des Blattes gelegenen Teil der Plattform bildet, überdeckt.

9. Leitschaufel nach Anspruch 6 oder 7, **dadurch gekennzeichnet, dass** der erste Bereich (R₁) der ersten Schicht (40) den zweiten Bereich (R₂) der zweiten Schicht (50) über eine im Wesentlichen dreieckige Zone, die sich von der Vorderkante (15) des Blattes nach vorne erweitert, überdeckt.

10. Leitschaufel nach einem der Ansprüche 6 bis 9, **dadurch gekennzeichnet, dass** die Fläche, wo die erste Schicht (40) die zweite Schicht (50) überdeckt, im Wesentlichen eben ist.

11. Leitschaufel nach einem der Ansprüche 6 bis 10, **dadurch gekennzeichnet, dass** sie ferner einen dritten Teil umfasst, der ähnlich dem zweiten Teil (20) und an dem anderen Längsende des ersten Teils (10) gelegen ist, umfasst, wobei der dritte Teil dazu bestimmt ist, eine weitere Plattform zu bilden.

12. Leitschaufel nach einem der Ansprüche 6 bis 11, **dadurch gekennzeichnet, dass** das Blatt eine metallische Eintrittskante, welche an die Vorderkante (15) angesetzt ist, umfasst.

13. Turbomaschine, die wenigstens eine Leitschaufel nach einem der Ansprüche 6 bis 12 umfasst.

## Claims

1. A method of fabricating a guide vane, the method being **characterized in that** it comprises:
a) producing a fiber preform (1) by 3D weaving a single piece, the preform comprising a first portion (10) extending along a longitudinal axis (A) and constituting the preform for the airfoil of said vane, and at a longitudinal end (11) of said first portion (10), a second portion (20) constituting the preform for the platform of said vane, the second portion (20) being produced as a first layer (40) and a second layer (50) facing the first layer and separated from said first layer (40) by unlinking without cutting while producing said preform (1);
b) folding the first and second layers (40, 50) in such a manner that each of them lies in a plane perpendicular to said longitudinal axis, substantially symmetrically to each other relative to said first portion (10), and in such a manner that a first region (R₁) of the first layer (40) covers a second region (R₂) of the second layer (50) in front of a front edge (15) of said first portion (10);
c) conforming said preform (1) in a mold; and
d) densifying said preform (1) with a polymer matrix.

2. A method according to claim 1, **characterized in that** the first layer (40) and the second layer (50) are substantially identical in volume and shape.

3. A method according to claim 1 or claim 2, **characterized in that** the fiber preform of said first layer (40) is cambered in a zone adjacent to said first portion (10), and the fiber preform of said second layer (50) is cambered in a zone adjacent to said first portion (10) in such a manner that said zone of the first layer (40) and said zone of the second layer (50) that are adjacent to said first portion (10) tend to take up symmetrical positions on respective sides relative to the first portion under the influence of the cambering.

4. A method according to any one of claims 1 to 3, **characterized in that** prior to conforming said preform (1) in the mold, a third portion situated at the other longitudinal end of said first portion (10) is made in a manner similar to said second portion (20) for the purpose of forming another platform.

5. A method according to any one of claims 1 to 4, **characterized in that** said first portion (10) includes a metal leading edge fitted on said front edge (15).

6. A guide vane made of composite material comprising a polymer matrix reinforced by a fiber structure in three dimensions, said vane comprising an airfoil-forming first portion (10) and a second portion (20) situated at a longitudinal end of the first portion (10) and forming a platform extending in a plane substantially perpendicular to said airfoil, said fiber structure being **characterized in that** all of the fiber elements forming said fiber structure are continuous, and **in that** the region of the fiber structure forming the second portion includes a first layer (40) extending in said plane on one side of said airfoil and in front of a front edge (15) of said airfoil, and a second layer (50) extending in said plane on one side of said airfoil and in front of said front edge (15) of said airfoil substantially symmetrically to said first layer (40) relative to said airfoil, in such a manner that a first region (R₁) of said first layer (40) covers a second region (R₂) of said second layer in front of said front edge (15).

7. A guide vane according to claim 6, **characterized in that** said first layer (40) and said second layer (50) are substantially identical in volume and shape.

8. A guide vane according to claim 6 or claim 7, **characterized in that** said first region (R₁) of the first layer (40) covers said second region (R₂) of the second layer (50) over a zone that is substantially rectangular, constituting all of the portion of the platform that is situated in front of said front edge (15) of the airfoil.

9. A guide vane according to claim 6 or claim 7, **characterized in that** said first region (R₁) of the first layer (40) covers said second region (R₂) of the second layer (50) over a zone that is substantially triangular, flaring forwards from said front edge (15) of the airfoil.

10. A guide vane according to any one of claims 6 to 9, **characterized in that** the surface where said first layer (40) covers said second layer (50) is substantially plane.

11. A guide vane according to any one of claims 6 to 10, **characterized in that** it further includes a third portion similar to said second portion (20) and situated at the other longitudinal end of said first portion (10), said third portion serving to form another platform.

12. A guide vane according to any one of claims 6 to 11, **characterized in that** said airfoil includes a metal leading edge fitted on said front edge (15).

13. A turbomachine including at least one guide vane according to any one of claims 6 to 12.
